# EUROPEAN PATENT APPLICATION

(11) **EP 2 416 308 A1**
(43) Date of publication of application: **08.02.2012**
(21) Application number: 10171680.1
(22) Date of filing: 03.08.2010
(51) Int. Cl.: G09G 3/34, A47J 27/05

(54) **Display device**

(71) Applicant: Koninklijke Philips Electronics N.V., 5621 BA Eindhoven (NL)
(72) Inventor: Meerbeek, Berent, W, 5600 AE Eindhoven (NL); Lenssen, Kars-Michiel, 5600 AE Eindhoven (NL); Schallig, Michiel, A.,A., 5600 AE Eindhoven (NL)
(74) Representative: Damen, Daniel Martijn

(57) **Abstract**

A wireless display device (400) is disclosed, comprising an electronic ink display (403) and a receiver (401) configured to receive power wirelessly and power the electronic ink display. The electronic ink display may be one of an electrophoretic display, an electrowetting display, or an electrofluidic display. In an embodiment of the invention, the receiver (401) is configured to receiver power wirelessly from a transmitter (411) of a wireless power supply unit (410). In another embodiment, the receiver is configured to harvest ambient radio frequency power.

## Description

### FIELD OF THE INVENTION

The present invention relates to a display device. In particular, the present invention relates to a display device which receives power wirelessly for powering an electronic ink display.

### BACKGROUND OF THE INVENTION

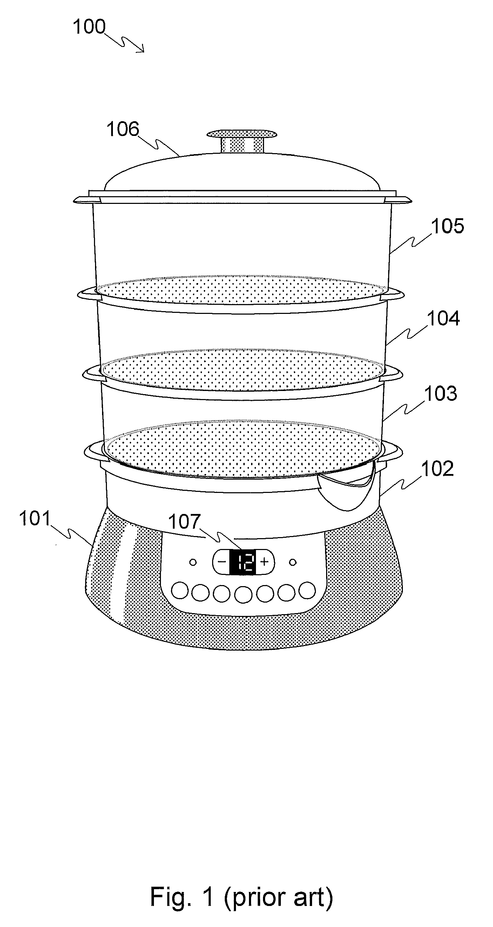

Electronic display devices, such as liquid crystal displays (LCDs), are included in a wide range of consumer goods. For instance, a kitchen appliance may include a display for indicating the temperature of a foodstuff being heated, or the amount of time remaining before a cooking cycle is completed. As an example, a conventional steamer is illustrated in Fig. 1. The steamer 100 is used for cooking food such as rice and vegetables, and comprises a base 101, atop of which sits a reservoir 102, a plurality of stackable compartments 103, 104, 105 and a lid 106. An LCD 107 is included in the base 101, which also comprises a power supply (not shown) for powering components such as a heater and the LCD 107. The LCD displays the time remaining in the current cooking cycle.

However, the use of such display devices is restricted by the requirement to supply electrical power to the display. For example, in a mains-powered apparatus, it is necessary to route wiring from the display device to a power supply unit. This may increase the complexity of the manufacturing process, and hence the cost, and may also restrict the choice of where to place the display on the apparatus.

### SUMMARY OF THE INVENTION

According to the present invention, there is provided a display unit comprising an electronic ink display configured to be switchable between a plurality of display states, and a receiver configured to receive power wirelessly and power the electronic ink display.

The electronic ink display may be an electrophoretic display, an electrowetting display, or an electrofluidic display.

The apparatus may further comprise a power converter for converting the received power into power suitable for powering the electronic ink display.

The plurality of display states may comprise an optically transparent state and an optically opaque state.

The electronic ink display may be arranged to cover a substantial portion of an exterior surface of a compartment configured to store food.

The receiver may comprise a radio frequency RF receiver configured to receive RF power, and/or said power suitable for powering the electronic ink display may comprise direct current DC power.

The receiver may be configured to harvest ambient power from one or more sources.

According to the present invention, there is also provided apparatus comprising a wireless power supply unit comprising a power supply and a transmitter, and at least one wireless display unit, wherein the transmitter is arranged to receive electrical power from the power supply and transmit said electrical power wirelessly to the at least one wireless display unit.

The apparatus may further comprise a control unit configured to switch a display state of the electronic ink display of one of the wireless display units.

The control unit may be configured to switch a display state of the electronic ink display after a selectable time period, and/or configured to switch a display state of the electronic ink display according to a sensor, and/or configured to switch a display state of the display according to user input.

The control unit may be configured to selectively control an electronic ink display of one of the plurality of wireless display units by transmitting a control signal, each one of the control signals corresponding to one of the plurality of wireless display units, or may be configured to switch a display state of an electronic ink display of one of the plurality of wireless display units by switching the transmitter on or off.

The apparatus may further comprise a plurality of separable components each including one of the plurality of wireless display units, wherein the plurality of separable components are configured to be located at different distances from the transmitter.

The apparatus may comprise a food preparation device comprising a base unit including the wireless power supply unit, wherein the plurality of separable components comprises a plurality of compartments configured to contain food.

According to the present invention, there is further provided a method of powering a display, the method comprising receiving power wirelessly at a receiver, and supplying the received power to an electronic ink display.

Receiving power may comprise harvesting ambient power and/or receiving power from a transmitter.

### BRIEF DESCRIPTION OF THE DRAWINGS

Embodiments of the invention will now be described, by way of example, with reference to the accompanying drawings in which:
Figure 1 illustrates a conventional steamer including an LCD;
Figure 2 illustrates a steamer comprising a plurality of wirelessly-powered electrophoretic displays, according to an embodiment of the present invention;
Figures 3a and 3b illustrate one of the stackable compartments of Fig. 2 in the opaque and transparent display states, respectively;
Figure 4 schematically illustrates a wireless display unit and a wireless power supply unit, according to an embodiment of the present invention;
Figure 5 schematically illustrates wireless power transmission between a wireless power supply unit and a plurality of wireless display units in the steamer 200 of Fig. 2;
Figure 6 schematically illustrates a wireless display unit configured to harvest ambient RF power, according to an embodiment of the present invention; and
Figure 7 illustrates a multi-colour electrophoretic display comprising a plurality of electrophoretic layers, according to an embodiment of the present invention.

### DETAILED DESCRIPTION OF THE DRAWINGS

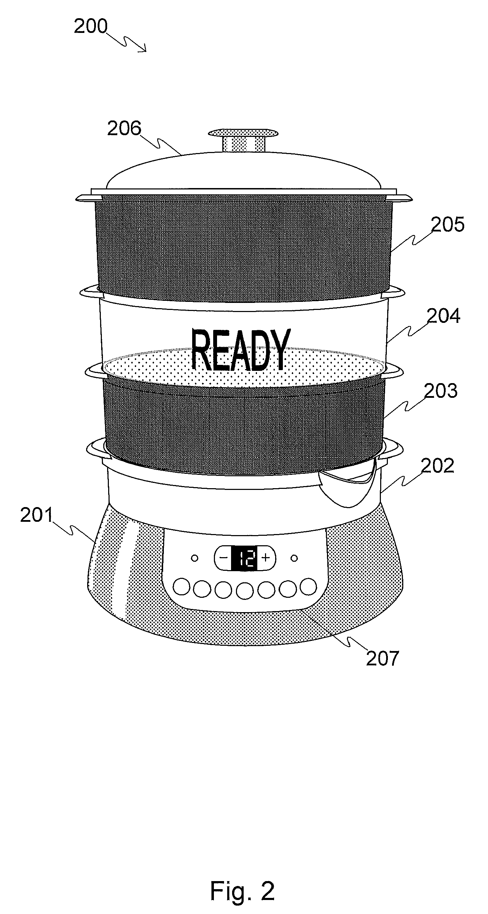

Referring now to Fig. 2, a steamer comprising a plurality of wirelessly-powered electrophoretic displays is illustrated, according to an embodiment of the present invention. Like the conventional steamer 100, the steamer 200 of the present embodiment comprises a base 201, a reservoir 202, a plurality of stackable compartments 203, 204, 205 and a lid 206. However, the steamer 200 of the present embodiment differs from the conventional steamer 100 in that each one of the stackable compartments 203, 204, 205 further comprises an electrophoretic display. Although the present embodiment comprises a steamer, other embodiments may in general comprise any domestic appliance, or food and beverage appliance or container. For example, the present embodiment comprises a plurality of compartments 203, 204, 205 configured to contain food, but in another embodiment may comprise a plurality of compartments which are configured to contain a material or substance other than food. Alternatively, yet another embodiment may comprise a plurality of separable components each including a display which is configured to be powered wirelessly.

In the present embodiment, the display of each compartment comprises an electrophoretic display which is switchable between a transparent state and an opaque state. As shown in Fig. 2, each display covers a substantial portion of the exterior surface (i.e. the side wall) of one of the compartments. The side wall itself is formed from an optically transparent material, and so the compartment may be rendered transparent or opaque by switching the display to a transparent or an opaque mode. The compartments are separable, and when stacked together have outer surfaces which are substantially aligned, with the electrophoretic displays being arranged to cover substantially the whole of the aligned outer surfaces.

The display of each compartment 203, 204, 205 may be switched between different display states to indicate when a cooking cycle for that particular compartment is complete. More specifically, the base 201 comprises a control panel 207 which enables a user to set separate cooking times for each one of the compartments 203, 204, 205. As all of the compartments 203, 204, 205 share a common heat source (i.e. steam provided by the reservoir 202), when different cooking times are set for different compartments it is not possible to automatically cease heating of one compartment whilst continuing to heat the remaining compartments. Therefore, it is necessary to alert a user when the selected time period (i.e. the set cooking time) for a particular compartment has elapsed, so that the user may remove the food from that compartment to prevent overcooking.

In the present embodiment, each one of the compartments 203, 204, 205 includes its own electrophoretic display, meaning that a user of the steamer can quickly determine at a glance which compartments have completed the preselected cooking cycle. A control unit included in the base 201 controls the display of each one of the compartments 203, 204, 205 to visually indicate when a cooking cycle for that particular compartment is complete. In the present embodiment, each display is switched from an opaque display state whilst cooking is in progress, to a transparent display state once cooking is complete. Furthermore, in the present embodiment, the display of each compartment is arranged to display the text "Ready" once the cooking cycle is complete. In the example shown in Fig. 2, top and bottom ones of the compartments 203, 205 are displaying an opaque state, indicating that the cooking cycles for those compartments are not yet complete. However, the middle compartment 204 has switched to a transparent state, indicating that the cooking cycle for that compartment is complete.

Again, although the present embodiment comprises a steamer, other embodiments may in general comprise any device in which it is desired to provide a display unit capable of receiving power wirelessly (e.g. where a wired connection would be unsuitable).

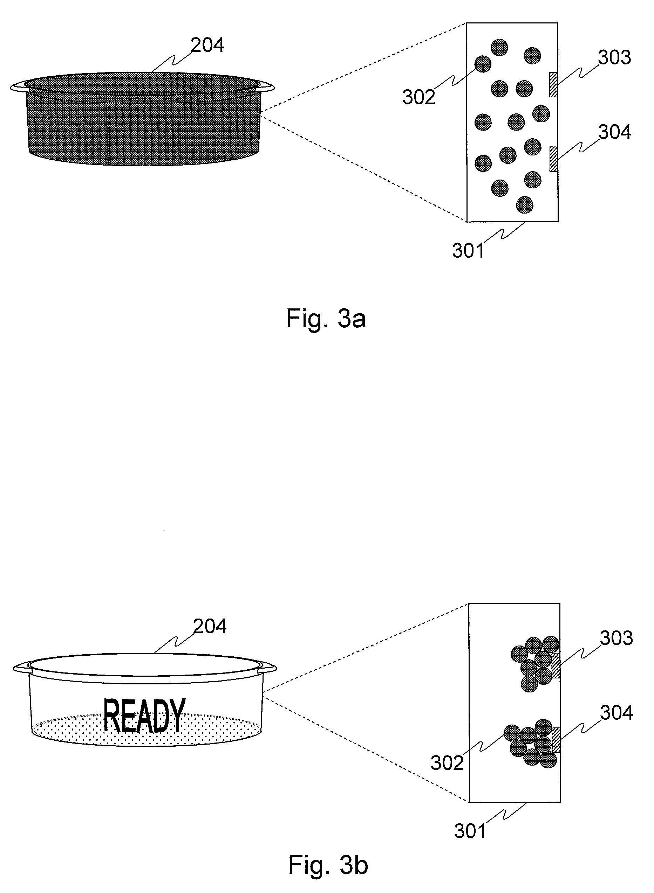

The operation of the electrophoretic display will now be described with reference to Figs. 3a and 3b, which illustrate the middle compartment of the steamer of Fig. 2. Specifically, in Figs. 3a and 3b, a magnified portion of the electrophoretic display is schematically illustrated, to show how the display is switched from an optically opaque display state to an optically transparent display state. Here, 'optically opaque' may refer to a display state with, for example, a transmission value of 1 % (i.e. not completely opaque). Similarly, 'optically transparent' may refer to a display state with, for example, a transmission value of 70 % (i.e. not completely transparent). Figure 3a shows the compartment 204 with the electrophoretic display in an optically opaque display state, whilst Fig. 3b shows the compartment 204 with the electrophoretic display in an optically transparent state. In other embodiments of the present invention, the electrophoretic display may be configured to switch between a transparent state and a tinted, or translucent, state. In the tinted or translucent state, the display is configured to still allow a portion of light through, such that a contents of the compartment remains visible to a user.

As shown in Fig. 3a, the electrophoretic display comprises a sealed volume 301 which contains an optically transparent liquid. The sealed volume may comprise one pixel of a multi-pixel display, or the whole display may comprise a single volume which is switched uniformly. Dispersed within the liquid are coloured particles 302, which carry an electric charge. Electrodes 303, 304 are patterned onto a wall of the sealed volume 301. In the opaque display state illustrated in Fig. 3a, no potential is applied to the electrodes 303, and so the particles 302 are evenly distributed. In this state, when the display is viewed by a user, it appears opaque with a colour corresponding to the colour of the particles 302.

To switch the electrophoretic display to a transparent display state, as shown in Fig. 3b, a potential is applied to the electrodes 303, 304 which is opposite to the charge carried by the coloured dye particles 302. This attracts the particles 302 to the electrodes 303, 304, causing the particles to cluster around the electrodes 303, 304. This leaves the majority of the sealed volume 301 substantially free of particles 302, and hence when viewed by a user, the display appears transparent.

In the present embodiment, the electrophoretic display consumes relatively little power in comparison to a conventional LCD. More specifically, the electrophoretic display requires power of the order of µW/cm² to switch from one display state to another, and consumes several nW/cm² when holding in the transparent display state. That is, the electrophoretic display consumes less than 1 mW/cm² when switching between display states or maintaining a display state, and is capable of being powered wirelessly. Holding the display in the opaque display state (i.e. particles evenly dispersed) does not consume any energy.

Although one structure of the electrophoretic display has been described herein with reference to Figs. 3a and 3b, other alternative structures are known in the art, and may be substituted according to the requirements of different applications. The electrophoretic display may comprise a single switchable volume, or a plurality of pixels in a similar manner to a conventional display (e.g. an LCD panel), or a plurality of independently switchable portions with a predefined pattern, for example corresponding to the letters "R", "E", "A", "D", and "Y" in order to display the text "READY" (cf. Fig. 2).

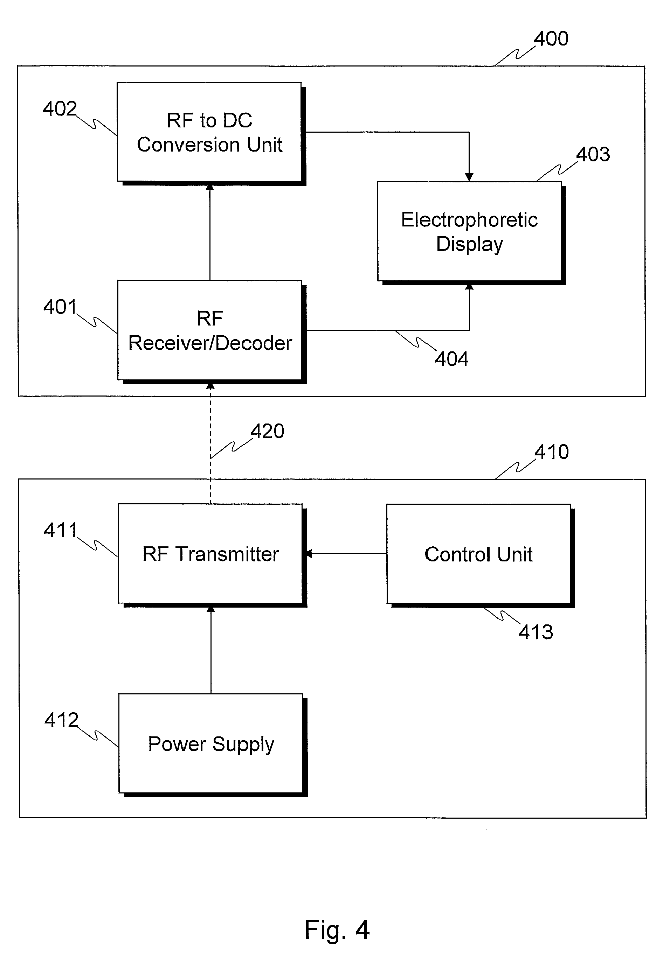

Referring now to Fig. 4, a wireless display unit and a wireless power supply unit are schematically illustrated, according to an embodiment of the present invention. The wireless display unit 400 comprises a radio-frequency (RF) receiver 401, a power conversion unit 402 for converting RF power into DC power, and an electrophoretic display 403. The wireless power supply unit 410 comprises an RF transmitter 411, a power supply 412, and a control unit 413.

The power supply 412 is coupled to the RF transmitter 411, which receives electrical power from the power supply and transmits the electrical power wirelessly as RF power 420. The power supply 412 may, for example, comprise a transformer connected to a mains power source (in a mains-powered apparatus), or a battery (in a battery-powered apparatus). The RF power 420 is received by the RF receiver 401 of the wireless display unit 400, and converted into DC power by the power conversion unit 402 which is coupled to the RF receiver 401. The DC power is provided to the electrophoretic display 403 in order to power the electrophoretic display 403. That is, the DC power may be used to switch the electrophoretic display 403 from one display state to another (e.g. from transparent to opaque or vice versa), or to maintain the electrophoretic display 403 in a particular display state (e.g. the transparent state). However, in another embodiment, the display may not be powered by DC. In general terms, the power conversion unit may be arranged to convert the received power into any power which is suitable for powering the display.

In the present embodiment, the wireless power supply unit 410 also comprises a control unit 413, which is configured to control the RF transmitter 411 to transmit control signals to the wireless display unit 400, by modulating the RF signal. The RF receiver 401 is configured to receive and decode the RF signal, and pass the control signals to the electrophoretic display 403. A connection 404 is provided between the RF receiver 401 and the electrophoretic display 403 in order to carry control signals from the receiver 401 to the display 403. However, in other embodiments, alternative control methods may be used, and the connection 404 between the receiver 401 and display 403 may be omitted. For example, in another embodiment of the present invention, the control unit 413 is arranged to switch the display 403 by switching the RF transmitter 411 on or off. In this embodiment, as control signals are not used, the connection between the receiver 401 and display 403 is omitted. When the transmitter is switched on, the display receives power and changes display state (e.g. to the transparent state), and when the transmitter is switched off, the display reverts to a previous display state (e.g. the opaque state).

Continuing with reference to Fig. 4, in the present embodiment, the electrophoretic display 403 is configured to be responsive to the control signals. For example, the electrophoretic display 403 may be configured to remain in a particular display state until a control signal is received from the control unit 413, at which point the electrophoretic display switches to a different display state as indicated by the control signal. In embodiments where the electrophoretic display 403 only has two display states (e.g. transparent and opaque), only a single control signal may be specified, the electrophoretic display 403 being responsive to the control signal to change from the current display state to the other display state. However, in other embodiments, the electrophoretic display may be switchable between more than two display states (e.g. between a plurality of greyscale states having different optical transmission values). The electrophoretic display may also be configured to switch between differently coloured display states. In such embodiments, a plurality of control signals may be specified, each identifying a particular one of the display states. The electrophoretic display 403 may be configured to respond to a received control signal by switching to the particular display state specified by the control signal.

As the wireless display unit 400 receives power wirelessly, it is not necessary to provide a wired connection between the wireless display unit 400 and other system components (e.g. power supply 412 or control unit 413). The wireless display unit 400 may therefore be included in removable components, such as the stackable compartments 203, 204, 205 of Fig. 2, without having to provide electrical contacts between adjacent compartments.

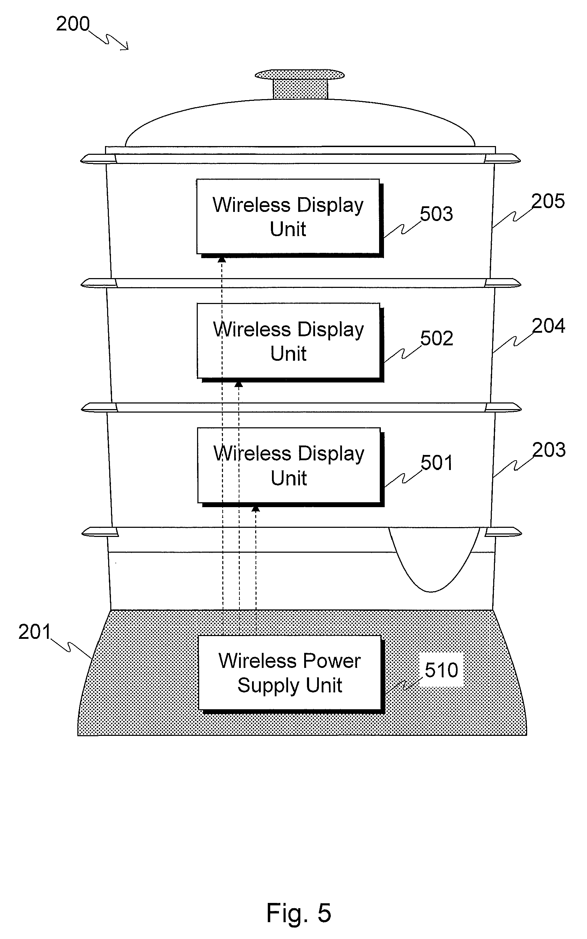

Furthermore, although in Fig. 4 the wireless power supply unit 410 is shown supplying power wirelessly to a single wireless display unit 400, in other embodiments the wireless power supply unit 410 may supply power wirelessly to a plurality of wireless display units. Such an embodiment will now be described with reference to Fig. 5, which schematically illustrates wireless power transmission between a wireless power supply unit and a plurality of wireless display units in the steamer 200 of Fig. 2.

As shown in Fig. 5, each one of the plurality of stackable compartments 203, 204, 205 includes a separate wireless display unit 501, 502, 503. Each one of the plurality of the wireless display units 501, 502, 503 is substantially similar to the wireless display unit 400 of Fig. 4. The base 201 of the steamer 200 includes a wireless power supply unit 510, which is substantially similar to the wireless power supply unit 410 of Fig. 4.

Since the compartments 203, 204, 205 are stacked, each one of the plurality of wireless display units 501, 502, 503 is situated at a different distance from the wireless power supply 510. An upper limit on the distance between the wireless display unit and the wireless power supply 510 will be determined by various factors, such as the power level at which the RF transmitter transmits power, and the efficiency of the RF-DC power conversion unit. In another embodiment of the present invention, a wireless display unit includes an energy storage unit (e.g. capacitor) which allows the wireless display unit to operate at greater distances from the transmitter, by storing received power and powering the display intermittently (i.e. once sufficient power has been stored).

Again, although the present embodiment comprises a steamer, other embodiments may in general comprise any device in which it is desired to provide a display unit capable of receiving power wirelessly. For example, in any device comprising a plurality of removable or separable components (i.e. where a wired connection between components would not be suitable), one or more of the components may include a wireless display unit similar to those included in the steamer of Fig. 5. The wireless display unit can wirelessly receive power from a transmitter in a main body of the device (i.e. a portion of the device which includes a power supply such as a battery or mains power supply), and/or can harvest ambient power in order to power a display. Alternatively, another embodiment of the present invention may comprise a single casing which contains both a wireless power supply and one or more wireless display units. Even where both the wireless power supply and wireless display unit are contained in the same casing, such an embodiment may allow the cost and/or complexity of a manufacturing process to be reduced, since it is not necessary to provide a wired connection between the wireless power supply and wireless display unit.

In the present embodiment, the control unit included in the wireless power supply 510 (cf. Fig. 4) is configured to independently control each one of the wireless display units 501, 502, 503 to switch between different display states. More specifically, the control unit is arranged to control a specific one of the wireless display units 501, 502, 503 by transmitting a control signal which is specific to that particular wireless display unit. In the present embodiment, each one of the wireless display units 501, 502, 503 is configured to be responsive to control signals which include an identifier that is unique to that particular wireless display unit. That is, one of the wireless display units 501, 502, 503 may receive control signals which are transmitted to any of the wireless display units 501, 502, 503, but will only respond to the control signals which include the correct identifier.

In another embodiment of the present invention, the control unit may be configured to transmit control signals at a plurality of different frequencies, with each one of a plurality of wireless display units being configured to receive control signals on a particular one of the frequencies. In this way, the control unit can selectively control the display of a particular wireless display unit by transmitting a control signal at the frequency which corresponds to that wireless display unit.

The control unit may be configured to selectively control the display state of each wireless display unit according to whether or not certain criteria are fulfilled. In the present embodiment, the steamer 200 is configured to allow a separate cooking time to be selected for each one of the compartments 203, 204, 205. The control unit is configured to count time from the start of a cooking operation. Once the selected time period (i.e. the selected cooking time) for one of the compartments has elapsed, the control unit transmits a control signal to the wireless display unit included in that compartment in order to switch the display state of the electrophoretic display from opaque to transparent. This provides a clear visual indication to a user that the selected cooking time for that compartment has elapsed.

In other embodiments, criteria other than elapsed time may be used to trigger a change in display state. For example, the control unit may selectively control the electrophoretic display of a particular compartment to display information about the contents of the compartment, such as temperature or mass. Such information may be obtained automatically via sensors disposed in the compartment, or may be manually entered by a user. Also, the control unit may switch the display state in response to user input (e.g. a user may press a button to cause the display to switch from one display state to another).

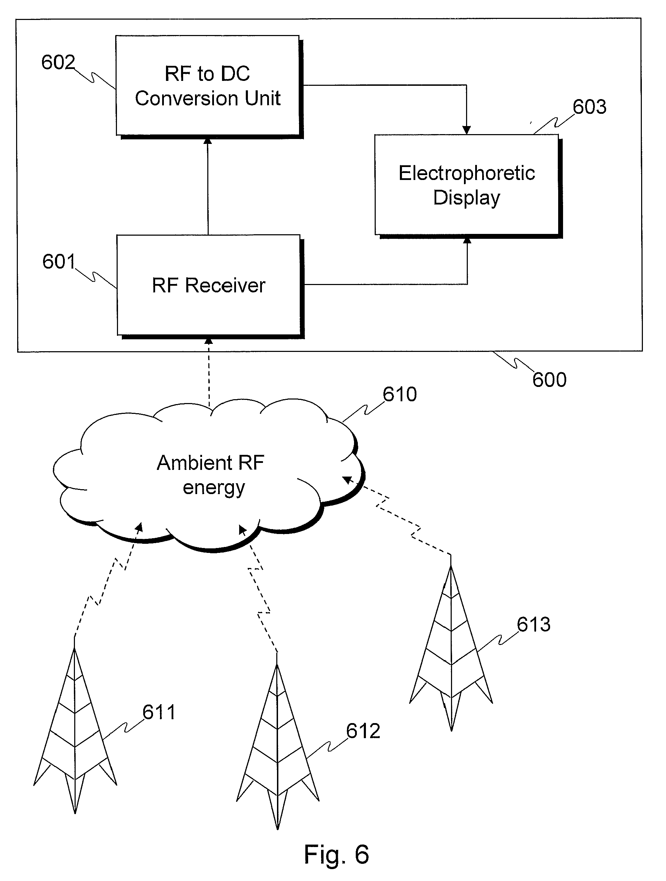

Although embodiments of the present invention have been described in which a wireless display unit is configured to receive RF power from a particular transmitter, in other embodiments a wireless display unit may be configured to harvest ambient RF power in order to power an electrophoretic display. Figure 6 schematically illustrates a wireless display unit which is configured to harvest ambient RF power, according to an embodiment of the present invention. Like the wireless display unit 400 of Fig. 4, the wireless display unit 600 of the present embodiment comprises an RF receiver 601, a power conversion unit 602 and an electrophoretic display 603. In this embodiment, the RF receiver 601 and the power conversion unit 602 are configured to harvest ambient RF energy 610.

As shown in Fig. 6, the ambient RF energy 610 comprises RF energy from a plurality of different RF sources 611, 612, 613. The RF sources 611, 612, 613 may for example include television transmitters, in which case the ambient RF energy may comprise RF waves carrying television signals. However, this is merely an example, and other sources of RF background radiation are known. Typically, ambient RF energy is continuously present in many terrestrial locations due to the proliferation of RF sources in the modem world. Embodiments of the present invention which are configured to harvest this ambient RF energy have reduced complexity since they can therefore recover energy already available, instead of generating their own RF energy. Also, such embodiments are cheaper to operate.

In the present embodiment, since the wireless display unit 600 harvests ambient RF power, a dedicated RF transmitter is not required in order to supply power. However, a transmitter may still be provided for wirelessly switching the electrophoretic display between different display states. That is, the wireless display unit 600 may additionally be configured to be controlled via a transmitter similar to the one of Fig. 4. Furthermore, in another embodiment, the receiver is arranged both to harvest ambient power and to receive power from a dedicated transmitter in a power supply unit (e.g. the wireless power supply of Fig. 4). Such an embodiment may be configured to receive power from the wireless power supply unit in the event that no ambient power (or insufficient ambient power) is available.

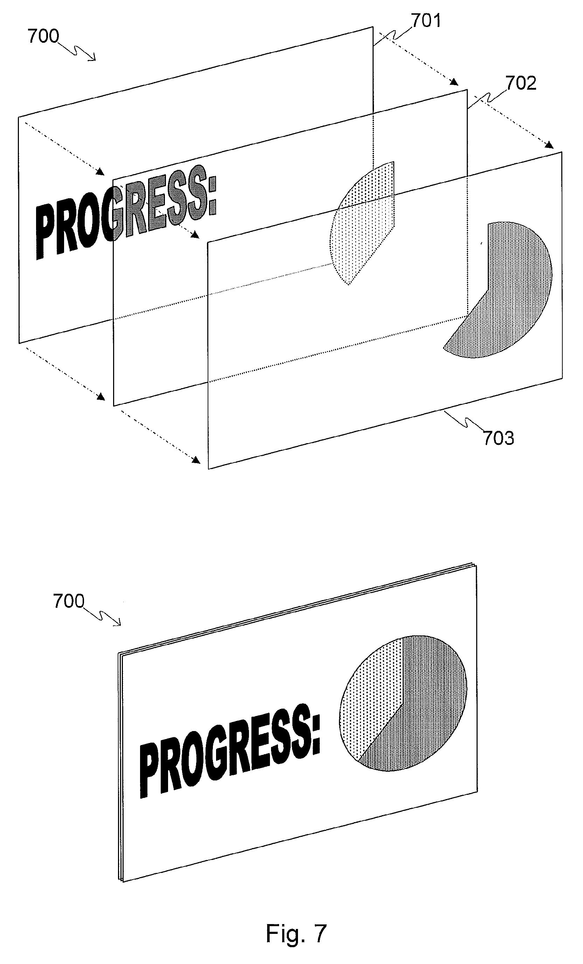

Finally, referring now to Fig. 7, a multi-colour electrophoretic display comprising a plurality of electrophoretic layers is illustrated according to an embodiment of the present invention. The display 700 comprises a first layer 701, a second layer 702, and a third layer 703, each of which is configured to have an opaque display state which corresponds to a different colour to the other layers. When the second 702 or third 703 layer is in a transparent display state, a layer behind (e.g. the first 701 or second 702 layer) becomes visible to a user. In this way, the display 700 may display multi-colour images and patterns.

Whilst certain embodiments of the present invention have been described above, it will be clear to the skilled person that many variations and modifications are possible while still falling within the scope of the invention as defined by the claims. Any feature of any embodiment described may be used in combination with any feature of a different embodiment.

For example, an embodiment of the present invention has been described which comprises a steamer for use in food preparation. However, other embodiments may comprise any device in which it is desired to provide a display unit capable of receiving power wirelessly. In general terms, such devices may include devices for domestic, industrial or commercial use. For instance, in any device comprising a plurality of removable or separable components (i.e. where a wired connection between components would not be suitable), one or more of the components may include a wireless display unit similar to those included in the steamer of Fig. 5. As an example, a piece of industrial machinery may include a plurality of components that are configured to be removable (e.g. for servicing, repair, or upgrade of the machinery). In one embodiment of the present invention, some or all of the components may include a wireless display unit configured to display a current status of the component (e.g. a date on which the component was last replaced).

Also, although embodiments of the present invention have been described in relation to wireless radio-frequency (RF) power transmission, in other embodiments, other frequencies may be used (e.g. microwave). Similarly, although embodiments have been described in relation to a steamer for use in food preparation, examples of the present invention may be more generally applicable to any device or appliance in which it is desired to incorporate a display. By enabling a display to receive power wirelessly, embodiments of the present invention may allow displays to be incorporated into products where this was previously impractical due to the requirement to provide a wired connection between the display and a power source. Such displays may be used in any apparatus, and in particular, a food preparation device, which has a plurality of separate units.

Also, embodiments of the present invention have been described which comprise one or more electrophoretic displays. However, in other embodiments, the electrophoretic display may be substituted with a different type of electronic ink display. Examples of electronic ink displays (sometimes referred to as "electronic paper" displays), include electrowetting displays or electrofluidic displays. In general, electronic ink displays switch between display states by redistributing a coloured material within a display volume, so as to control the visibility of the coloured material. Here, "coloured" may refer to any colour, including but not limited to white, black, grey, red, green and blue. The display volume may for example be a pixel, or the display may comprise a single large display volume. Typically, the display comprises one or more electrodes which are configured to apply an electric field across the display volume in order to cause the redistribution of material. Because the amount of material being moved is very small, the power required to switch between display states is very low (i.e. much less than 1 mW/cm²). Also, because electronic ink displays function by physically moving material within the display volume, they are often bistable, or at least require very little power to maintain a particular display state. Because electronic ink displays have low power consumption, the required power can be transmitted wirelessly over relatively large distances (i.e. several cms or tens of cms).

For example, in an electrophoretic display (as described above) the coloured material comprises coloured particles suspended in a liquid. In an electrowetting display, the coloured material is oil. Each display volume contains both oil and water, which are immiscible. With no applied voltage, the oil forms a layer between the water and an electrode, the electrode having a hydrophobic coating. The display state of the pixel is changed by applying a voltage which causes the water to displace the oil, resulting in a transparent pixel. In an electrofluidic display the coloured material is an aqueous pigment. A small portion (5-10 %) of the display volume comprises a reservoir which is arranged to hide the pigment from view. An applied voltage draws the pigment out of the reservoir, making the pixel appear coloured, and removing the voltage allows surface tension to pull the pigment back into the reservoir.

Additionally, embodiments of the present invention have been described in relation to a steamer comprising a plurality of stackable compartments (cf. Fig. 2), in which an exterior surface of each compartment is substantially covered by a display (e.g. an electrophoretic display). However, in other embodiments, the display may be provided in a different form. For example, the display may not cover the entire side wall of the compartment, but may comprise a smaller display on the front of the compartment. Alternatively, a display may be provided on a surface of at least one compartment, but not on each compartment.

Furthermore, embodiments of the present invention have been described in which a display is switched between display states after a selectable time period. However, in other embodiments, the display may be switched according to a sensor. For example, when used in a steamer similar to the one shown in Fig. 2, a temperature sensor may be included in one of the compartments. A display may be controlled to display a temperature measured by the temperature sensor, or may be switched to a different display state when a threshold temperature is reached.

## Claims

1. A display unit (400) comprising:
an electronic ink display (403) configured to be switchable between a plurality of display states; and
a receiver (401) configured to receive power wirelessly and power the electronic ink display.

2. The display unit of claim 1, wherein the electronic ink display is one of an electrophoretic display, an electrowetting display, or an electrofluidic display.

3. The display unit of claim 1 or 2, wherein the apparatus further comprises:
a power converter (402) for converting the received power into power suitable for powering the electronic ink display.

4. The display unit of claim 1, 2 or 3, wherein the plurality of display states comprises an optically transparent state and an optically opaque state.

5. The display unit of any one of the preceding claims, wherein the electronic ink display is arranged to cover a substantial portion of an exterior surface of a compartment configured to store food.

6. The display unit of any one of the preceding claims, wherein the receiver comprises a radio frequency RF receiver configured to receive RF power, and/or
wherein said power suitable for powering the electronic ink display comprises direct current DC power.

7. The display unit of any one of the preceding claims, wherein the receiver is configured to harvest ambient power (610) from one or more sources (611, 612, 613).

8. Apparatus comprising:
a wireless power supply unit (410) comprising a power supply (412) and a transmitter (411); and
at least one wireless display unit (400) as claimed in any one of claims 1 to 7; wherein the transmitter is arranged to receive electrical power from the power supply and transmit said electrical power wirelessly to the at least one wireless display unit.

9. The apparatus of claim 8, further comprising:
a control unit (413) configured to switch a display state of the electronic ink display of one of the wireless display units.

10. The apparatus of claim 9, wherein the control unit is configured to switch a display state of the electronic ink display after a selectable time period, and/or
wherein the control unit is configured to switch a display state of the electronic ink display according to a sensor, and/or
wherein the control unit is configured to switch a display state of the display according to user input.

11. The apparatus of claim 9 or 10, wherein the control unit is configured to selectively control an electronic ink display of one of the plurality of wireless display units by transmitting a control signal, each one of the control signals corresponding to one of the plurality of wireless display units, or
wherein the control unit is configured to switch a display state of an electronic ink display of one of the plurality of wireless display units by switching the transmitter on or off.

12. The apparatus of any one of claims 8 to 11, further comprising a plurality of separable components each including one of the plurality of wireless display units, wherein the plurality of separable components are configured to be located at different distances from the transmitter.

13. The apparatus of claim 12, wherein the apparatus comprises a food preparation device (200) comprising:
a base unit (201) including the wireless power supply unit (510),
wherein the plurality of separable components comprises a plurality of compartments (203, 204, 205) configured to contain food.

14. A method of powering a display, the method comprising:
receiving power wirelessly at a receiver; and
supplying the received power to an electronic ink display.

15. The method of claim 14, wherein receiving power comprises harvesting ambient power and/or receiving power from a transmitter.
